# EUROPEAN PATENT APPLICATION

(11) **EP 4 571 957 A1**
(43) Date of publication of application: **18.06.2025**
(21) Application number: 24214604.1
(22) Date of filing: 21.11.2024
(51) Int. Cl.: H01M 50/107, H01M 50/117, H01M 50/124, H01M 50/128, H01M 50/145, H01M 50/147, H01M 50/152, H01M 50/16, H01M 50/164, H01M 50/167, H01M 50/169, H01M 50/184, H01M 50/193, H01M 50/197

(54) **CYLINDRICAL SECONDARY BATTERY**

(30) Priority: 06.12.2023 KR 20230175375
(71) Applicant: SAMSUNG SDI CO., LTD., Yongin-si, Gyeonggi-do 17084 (KR)
(72) Inventor: Choi, Woo Hyuk, 17084 Yongin-si, Gyeonggi-do, (KR); Yang, Jun Ho, 17084 Yongin-si, Gyeonggi-do, (KR); Kwon, Jun Hwan, 17084 Yongin-si, Gyeonggi-do, (KR); Park, Hyun Suk, 17084 Yongin-si, Gyeonggi-do, (KR); Lee, Tae Yoon, 17084 Yongin-si, Gyeonggi-do, (KR); Kim, Young Ho, 17084 Yongin-si, Gyeonggi-do, (KR); Kang, Bong Geun, 17084 Yongin-si, Gyeonggi-do, (KR)
(74) Representative: Gulde & Partner

(57) **Abstract**

A cylindrical secondary battery includes: an electrode assembly; a can accommodating the electrode assembly therein, and including an upper surface portion in which a terminal hole is formed at one end, and a cylindrical side portion extending downward from the upper surface portion; a terminal portion coupled to the terminal hole and electrically connected to the electrode assembly; a cap plate coupled to an end portion of the side portion and electrically connected to the electrode assembly; and an anticorrosion material at a coupling portion of the side portion and the cap plate.

## Description

### BACKGROUND

### 1. Field

Aspects of some embodiments of the present disclosure relate to a cylindrical secondary battery having a corrosion-resistant structure.

### 2. Description of the Related Art

Recently, consumer demand for secondary batteries having a form in which both positive electrode and negative electrode terminals are located at one side of the secondary battery is increasing. This type of secondary battery may have an advantage in that an electrical connection structure with the outside is relatively simple.

In the above-described secondary batteries, one side of a cylindrical can or housing may be open, and an electrode assembly may be accommodated therein with an electrolyte. A cap assembly may be coupled to the open one side of the can. In the case of a can, when a cut surface such as the open one side is exposed to air for a long time, corrosion can occur and thus rust can occur. Alternatively, corrosion can occur at a coupling portion (a welded portion) between the cap assembly and the can due to influence of the electrolyte.

Corrosion and rust can cause the functions of the secondary battery to deteriorate, and thus may desirably be prevented.

The above information disclosed in this Background section is only for enhancement of understanding of the background and therefore the information discussed in this Background section does not necessarily constitute prior art.

### SUMMARY

The invention is defined by the appended claims. The description that follows is subjected to this limitation. Any disclosure lying outside the scope of said claims is only intended for illustrative as well as comparative purposes. Aspects of some embodiments of the present disclosure include a cylindrical secondary battery having a corrosion-resistant structure.

A cylindrical secondary battery according to some embodiments of the present disclosure includes: an electrode assembly; a can accommodating the electrode assembly therein, and including an upper surface portion in which a terminal hole is formed at one end, and a cylindrical side portion extending downward from the upper surface portion; a terminal portion coupled to the terminal hole to be electrically connected to the electrode assembly; a cap plate coupled to an end portion of the side portion to be electrically connected to the electrode assembly; and an anti-corrosion material or means provided at a coupling portion of the side portion and the cap plate.

According to some embodiments, the side portion may include a beading portion concavely formed on an upper portion of the cap plate, and a crimping portion spaced apart from the beading portion and whose end portion is formed to be bent inward, and the cap plate may be between the beading portion and the crimping portion.

According to some embodiments, the cylindrical secondary battery may further include a gasket inserted between the cap plate and the side portion.

According to some embodiments, the anti-corrosion material may be provided to cover the end portion of the crimping portion.

According to some embodiments, the anti-corrosion material may be provided to cover the end portion of the crimping portion and an end portion of the gasket.

According to some embodiments, the anti-corrosion material may be provided to cover the end portion of the crimping portion, an end portion of the gasket, and a portion of the cap plate.

According to some embodiments, the cap plate may be welded to the side portion.

According to some embodiments, the anti-corrosion material may be provided to cover the end portion of the side portion.

According to some embodiments, the anti-corrosion material may be provided to cover a welding portion of the end portion of the side portion and the cap plate.

According to some embodiments, the anti-corrosion material may be an anti-corrosion liquid.

According to some embodiments, the cylindrical secondary battery may further include a protrusion or rib formed to protrude from at least one surface of an outer end portion of the side portion and one side of the cap plate adjacent to the welding portion.

According to some embodiments, the protrusion or rib may have a lower height than a weld bead formed in the welding portion of the cap plate.

According to some embodiments, the protrusion or rib may have a circular ring shape.

According to some embodiments, the cap plate may further include a groove concavely formed from a surface adjacent to the welding portion.

Further, a cylindrical secondary battery according to some embodiments of the present disclosure includes: an electrode assembly; a can accommodating the electrode assembly therein, and including an upper surface portion in which a terminal hole is formed at one end, and a cylindrical side portion extending downward from the upper surface portion; a terminal portion coupled to the terminal hole to be electrically connected to the electrode assembly; a cap plate coupled to an end portion of the side portion to be electrically connected to the electrode assembly and insulated from the can; and an anti-corrosion material provided at a coupling portion of the terminal hole and the terminal portion.

According to some embodiments, the anti-corrosion material may be provided to cover a portion of a cut surface of the terminal hole and a portion of the upper surface portion adjacent to the terminal hole.

According to some embodiments, the anti-corrosion material may be an anti-corrosion liquid.

According to some embodiments, the cylindrical secondary battery may further include a coupling groove and a coupling protrusion formed adjacent to the terminal hole by forging.

According to some embodiments, the coupling groove may be concavely formed from a surface of the upper surface portion, a depth of the coupling groove may be lower than a thickness of the upper surface portion, and the coupling protrusion may be formed adjacent to the coupling groove and faces the inside of the can.

According to some embodiments, the terminal portion may include a rivet terminal inserted into the terminal hole to be electrically connected to the electrode assembly and at least one insulator interposed between the rivet terminal and the can to insulate the rivet terminal and the can.

### BRIEF DESCRIPTION OF DRAWINGS

FIG. 1 is a perspective view of a cylindrical secondary battery according to some embodiments.
FIG. 2 is a cross-sectional view of the cylindrical secondary battery according to FIG. 1.
FIG. 3 is an enlarged cross-sectional view of a portion of a can according to FIG. 1.
FIG. 4 is a cross-sectional view illustrating the can and an insulator according to FIG. 3.
FIG. 5 is a schematic diagram briefly illustrating an anti-corrosion portion according to some embodiments of the present disclosure.
FIGS. 6 and 7 are schematic diagrams briefly illustrating anti-corrosion portions according to some embodiments of the present disclosure.
FIG. 8 is a schematic diagram briefly illustrating examples of anti-corrosion portions according to some embodiments of the present disclosure.

### DETAILED DESCRIPTION

Aspects of some embodiments of the present disclosure are provided to more completely describe the present disclosure to those skilled in the art, the following embodiments may be modified into various other forms, and the scope of the present disclosure not limited to the following embodiments. Rather, these embodiments are provided to make the present disclosure more meaningful and complete and to fully convey the spirit of the present disclosure to those skilled in the art.

Further, in the accompanying drawings, a thickness and a size of each layer are exaggerated for convenience and clarity of description, and the same reference numerals indicate the same elements in the drawings. As used in the present specification, the term "and/or" includes any one of and all combinations of one or more of the listed items. Further, the meaning of "being connected" in the present specification refers to not only a case in which member A and member B are directly connected, but also a case in which member C is interposed between member A and member B to indirectly connect member A and member B.

The terms used in the present specification are used to describe specific embodiments and are not intended to limit the present disclosure. As used in the present specification, a singular form may include a plural form unless the context clearly indicates otherwise. Further, when used in the present specification, "comprise" and/or "comprising" specify(ies) the presence of mentioned features, numbers, steps, operations, members, elements and/or groups thereof, and do(es) not exclude the presence or addition of one or more other features, numbers, steps, operations, members, elements and/or groups.

Although the terms first, second, and the like are used in the present specification to describe various members, components, regions, layers and/or parts, it is clear that these members, components, regions, layers and/or parts should not be limited by these terms. These terms are used only to distinguish one member, component, region, layer, or part from another member, component, region, layer, or part. Accordingly, a first member, component, region, layer, or part to be described later may refer to a second member, component, region, layer, or part without departing from teachings of the present disclosure.

Spatially-related terms such as "beneath," "below," "lower," "above," and "upper" are used for easy understanding of one element or feature and another element or feature shown in the drawings. These spatially-related terms are provided for easy understanding of the present disclosure according to various process states or usage states of the present disclosure and are not intended to limit the present disclosure. For example, when the elements or features in the drawings are reversed, an element described as "lower" or "below" "becomes "upper" or "above." Accordingly, "below" is a concept encompassing "above" or "below."

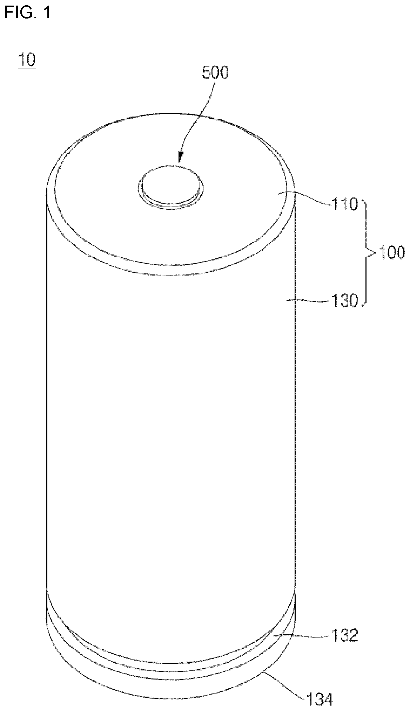

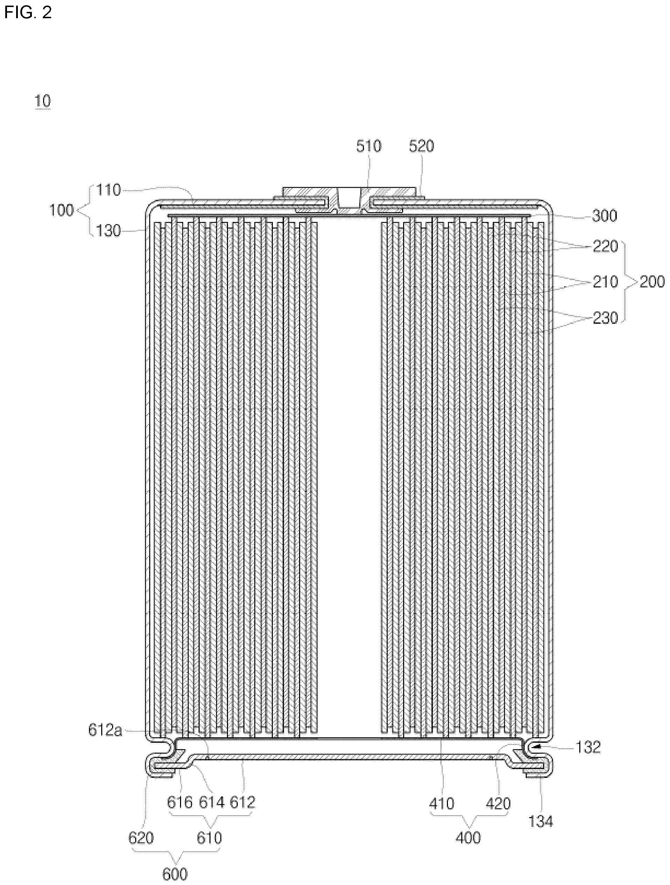

Here, a cylindrical secondary battery according to some embodiments of the present disclosure and a manufacturing method thereof will be described with reference to the accompanying drawings. In the following description, the cylindrical secondary battery will be described by defining an upper side as an upper direction and defining a lower side as a lower direction based on FIGS. 1 and 2 for convenience.

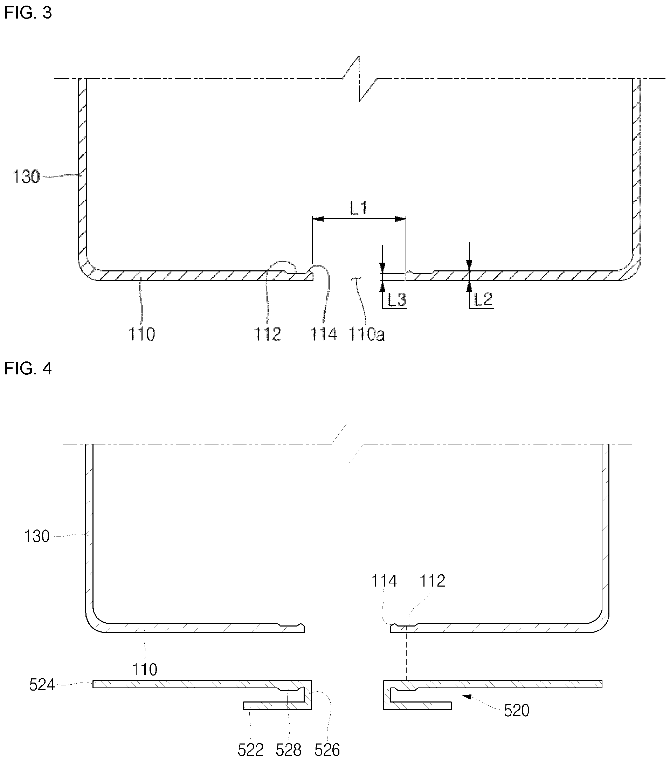

FIG. 1 is a perspective view of a cylindrical secondary battery according to some embodiments. FIG. 2 is a cross-sectional view of the cylindrical secondary battery according to FIG. 1. FIG. 3 is an enlarged cross-sectional view of a portion of a can according to FIG. 1. FIG. 4 is a cross-sectional view illustrating the can and an insulator according to FIG. 3.

As shown in FIGS. 1 and 2, a cylindrical secondary battery 10 according to some embodiments of the present disclosure may include a cylindrical can (or cylindrical housing) 100, an electrode assembly 200 accommodated or inserted or housed within the can 100, a first electrode current collecting plate 300 and a second electrode current collecting plate 400, a terminal portion 500 provided at one side of the can 100, and a cap assembly 600 provided at the other side of the can 100.

As shown in FIGS. 1 and 2, the can 100 may include a circular upper surface portion 110, and a cylindrical side portion 130 extending downward from the upper surface portion 110. Because a lower portion of the side portion 130 is open, the can 100 has a cylindrical shape whose lower end is open.

As shown in FIGS. 3 and 4, a terminal hole 110a may be formed through a center of the upper surface portion 110. A portion of the terminal portion 500 may be exposed to the outside of the secondary battery 10 through the terminal hole 110a. A coupling groove 112 and a coupling protrusion 114 may be provided on an inner surface adjacent to the terminal hole 110a.

The coupling groove 112 may be formed by forging. The coupling groove 112 may have a circular ring shape having a width (e.g., a set or predetermined width) based on a center of the upper surface portion 110 of the can 100. A diameter of the terminal hole 110a may be defined as L1. In this case, an outer diameter of the coupling groove 112 may be formed larger than the diameter of the terminal hole 110a. The outer diameter of the coupling groove 112 is a diameter based on an outer edge of the coupling groove 112 in a direction away from the center of the upper surface portion 110. A length obtained by subtracting the diameter L1 of the terminal hole 110a from the outer diameter of the coupling groove 112 is defined as the width of the coupling groove 112. In other words, the width of the coupling groove 112 may be understood as a radial length of the upper surface portion 110 based on FIG. 3.

Further, a depth L3 of the coupling groove 112 may refer to a length in a thickness L2 direction of the upper surface portion 110. The depth L3 of the coupling groove 112 is a length between the inner surface and the outer surface of the coupling groove 112. The coupling groove 112 is concavely processed from the inner surface of the upper surface portion 110 through forging. Accordingly, the depth L3 of the coupling groove 112 is formed smaller than the thickness L2 of the upper surface portion 110. For example, the depth L3 of the coupling groove 112 may be 10 to 30% smaller than the thickness L2 of the upper surface portion 110.

When the coupling groove 112 is forged from the upper surface portion 110, metal is pushed and protrudes outward by the amount of processing. In this case, a direction in which the metal is pushed is a direction of or toward the cut surface (a cut side surface) of the terminal hole 110a. Further, the direction in which the metal is pushed and protrudes is a direction toward the electrode assembly 200. When the coupling groove 112 is formed, a portion which is pushed and protrudes may be processed so that a cross-sectional shape thereof becomes triangular. The protrusion formed in this way is the coupling protrusion 114. A protruding height of the coupling protrusion 114 should be lower than or equal to the inner surface of the upper surface portion 110 of the can 100 to prevent the coupling protrusion 114 from interfering with surrounding components.

The coupling groove 112 and the coupling protrusion 114 serve to improve or increase a sealing force by increasing a coupling force with an insulator 520, which will be described in more detail below. Accordingly, leakage of an electrolyte accommodated in the can 100 may be prevented or reduced. Further, a frictional force between the insulator 520 and the upper surface portion 110 increases due to the coupling groove 112 and the coupling protrusion 114. Accordingly, the insulator 520 may be very strongly coupled to the upper surface portion 110. Accordingly, even when a rivet terminal 510 moves, the insulator 520 may not move. Accordingly, in order to rotate the rivet terminal 510, a very large rotational pressure may be applied. That is, the rotational pressure of the rivet terminal 510 increases compared to a conventional terminal structure. Accordingly, the rivet terminal 510 may not be rotated by general external impacts or vibrations which occur in a use environment of the secondary battery. Accordingly, a problem of the rivet terminal 510 rotating due to an external force may be prevented or reduced.

The side portion 130 is integrally formed with the upper surface portion 110 as an upper end thereof is connected to the upper surface portion 110. A lower end of the side portion 130 is open, and the cap assembly 600 is provided at the open end portion. A beading portion 132 may be formed in the side portion 130 adjacent to the lower end. The beading portion 132 may be formed concavely inward from the side portion 130. The end portion spaced apart from the beading portion 132 may be bent toward the inside of the can 100 to form a crimping portion 134. Separation of the electrode assembly 200 is prevented by the beading portion 132. The cap assembly 600 may be located between the beading portion 132 and the crimping portion 134. The crimping portion 134 fixes the cap assembly 600 so that the can 100 is sealed.

The can 100 having the above-described structure may be formed of steel, a steel alloy, aluminum, an aluminum alloy, or equivalents thereof, but the material is not limited here. The electrode assembly 200, the first electrode current collecting plate 300, and the second electrode current collecting plate 400 are accommodated in the can 100 together with the electrolyte.

As shown in FIG. 2, the electrode assembly 200 may have a form in which a first electrode plate 210, a second electrode plate 220, and a separator 230 interposed therebetween are wound in a cylindrical form. According to some embodiments, the first electrode plate 210 may be a positive electrode plate, and the second electrode plate 220 may be a negative electrode plate. However, the opposite may also be possible.

In the first electrode plate 210, a positive electrode active material layer 212 may be formed on at least one surface of an aluminum (Al) foil by coating or the like. For example, the positive electrode active material layer 212 may be formed of a transition metal oxide (LiCoO₂, LiNiO₂, LiMn₂O₄, or the like). A first electrode uncoated portion where the positive electrode active material layer 212 is not formed may be provided in the first electrode plate 210. A plurality of first electrode substrate tabs 214 may be formed by cutting the first electrode uncoated portion into a shape (e.g., a set or predetermined shape) by notching or the like. According to some embodiments, the first electrode substrate tab 214 may be arranged toward the upper surface portion 110 of the can 100. Further, the first electrode substrate tab 214 may protrude further upward than the separator 230 to be electrically connected to the first electrode current collecting plate 300.

In the second electrode plate 220, a negative electrode active material layer 222 may be formed on at least one surface of a copper or nickel foil by coating or the like. For example, the negative electrode active material layer 222 may be formed of graphite, carbon, or the like. A second electrode uncoated portion where the negative electrode active material layer 222 is not formed may be provided in the second electrode plate 220. A plurality of second electrode substrate tabs 224 may be formed by cutting the second electrode uncoated portion into a shape (e.g., a set or predetermined shape) by notching or the like. According to some embodiments, the second electrode substrate tab 224 may be arranged toward the bottom of the can 100. Further, the second electrode substrate tab 224 may protrude further downward than the separator 230 to be electrically connected to the second electrode current collecting plate 400. Some of the second electrode substrate tabs 224 may be welded and electrically connected to the beading portion 132 of the can 100.

The separator 230 may be polyethylene (PE) or polypropylene (PP), but is not limited thereto in the present disclosure. The separator 230 may prevent or reduce instances of an electrical short circuit between the first electrode plate 210 and the second electrode plate 220 and allow only the movement of lithium ions.

The electrode assembly 200 having the above-described structure is electrically connected to the first electrode current collecting plate 300 and the second electrode current collecting plate 400 and electrically connected to the terminal portion 500 and the can 100.

As shown in FIG. 2, the first electrode current collecting plate 300 has a disk shape and may be made of the same material as the first electrode plate 210. For example, the first electrode current collecting plate 300 may be formed of aluminum or an aluminum alloy. A diameter of the first electrode current collecting plate 300 may be smaller than a diameter of the can 100 to prevent the first electrode current collecting plate 300 from being electrically connected to the can 100. The first electrode current collecting plate 300 may be welded in a state in which a lower surface thereof is in contact with the first electrode substrate tab 214.

Accordingly, the first electrode current collecting plate 300 and the first electrode plate 210 may be electrically connected. Further, an upper surface of the first electrode current collecting plate 300 may be welded to the rivet terminal 510 of the terminal portion 500, which will be described below. Accordingly, the first electrode current collecting plate 300 and the rivet terminal 510 may be electrically connected. Accordingly, the first electrode plate 210 and the rivet terminal 510 may be electrically connected to each other by the first electrode current collecting plate 300. That is, the first electrode current collecting plate 300 may become a path for the flow of current between the first electrode plate 210 and the rivet terminal 510.

As shown in FIG. 2, the second electrode current collecting plate 400 may include a disk-shaped plate surface portion 410 and a contact portion 420 extending from the plate surface portion 410. An upper surface of the plate surface portion 410 may be welded while in contact with the second electrode substrate tab 224. Accordingly, the second electrode current collecting plate 400 and the second electrode plate 220 may be electrically connected. To this end, the second electrode current collecting plate 400 may be made of the same material as the second electrode plate 220. For example, the second electrode current collecting plate 400 may be made of copper. According to some embodiments, the contact portion 420 may extend downward from an edge of the plate surface portion 410. The contact portion 420 may be in close contact with an inner surface of the beading portion 132. To this end, the contact portion 420 may have a curve corresponding to a curve of the beading portion 132. For example, the contact portion 420 may be welded and electrically connected to the beading portion 132. However, the second electrode current collecting plate 400 is not electrically connected to the cap assembly 600.

Meanwhile, as shown in FIGS. 1 and 2, the terminal portion 500 may include the rivet terminal 510 and at least one insulator 520 for insulating the rivet terminal 510.

The rivet terminal 510 is inserted into the terminal hole 110a formed in the upper surface portion 110 of the can 100. The rivet terminal 510 is electrically connected to the first electrode plate 210 through the first electrode current collecting plate 300. The rivet terminal 510 is a terminal coupled to the upper surface portion 110 of the can 100 by a riveting method. The rivet terminal 510 may be inserted into the terminal hole 110a from the outside toward the inside of the can 100.

In this case, one end of the rivet terminal 510 is located on the outside of the can 100, and the other end is located on the inside of the can 100. When the rivet terminal 510 is coupled, at least one insulator 520 may be inserted between the rivet terminal 510 and the upper surface portion 110 of the can 100 to insulate the can 100 and the rivet terminal 510. In a state in which the rivet terminal 510 is inserted into the terminal hole 110a, an inner end portion of the rivet terminal 510 is compressed and deformed through processing such as pressing, spinning, or the like. Accordingly, the rivet terminal 510 may be in close contact with the upper surface portion 110 of the can 100.

The insulator 520 may be made of an insulating material. The insulator 520 may have a cross-sectional shape in which an approximate 'H' shape is laid down. The insulator 520 may be used without limitation as long as it does not dissolve in the electrolyte and is made of an insulating material. Further, the insulator 520 may have appropriate elasticity for close coupling with the upper surface portion 110 of the can 100 and the rivet terminal 510 through pressurization. Referring to FIG. 4, a coupling portion 528 coupled to the above-described coupling groove 112 may be provided on the insulator 520. As shown in FIGS. 2 and 4, the insulator 520 may include a disk-shaped first portion 522 located outside the upper surface portion 110 and a disk-shaped second portion 524 located inside the upper surface portion 110, and a cylindrical third portion 526 which connects the first portion 522 and the second portion 524. The above-described coupling portion 528 may be formed on the second portion 524.

Further, the second portion 524 may have a length sufficiently extending outside the coupling groove 112 of the upper surface portion 110. For example, the length of the second portion 524 may be 2 to 3 times the length of the coupling groove 112. Further, for example, when there is no separate insulating member between the first electrode current collecting plate 300 and the can, the second portion 524 may be provided to be larger than the first electrode current collecting plate 300. The first portion 522 to the third portion 526 may be integrally formed, or may be formed separately and coupled to the upper surface portion 110. Embodiments according to present disclosure have been described herein based on an example in which the first portion 522 to the third portion 526 are integrally formed. The coupling portion 528 is formed to protrude from an upper surface of the second portion 524 based on FIG. 2, and is formed to protrude from a lower surface of the second portion 524 based on FIG. 4. The coupling portion 528 is formed to correspond to a position of the coupling groove 112, and the coupling portion 528 has a protrusion shape corresponding to a shape of the coupling groove 112. When viewed in a plan view, because the coupling groove 112 is a circular groove, the coupling portion 528 may be a circular ring-shaped protrusion. According to some embodiments, the insulator 520 may additionally include a groove corresponding to the coupling protrusion 114. However, because the insulator 520 is elastic and may come into close contact with the coupling protrusion 114, the groove corresponding to the coupling protrusion 114 need not be provided.

As shown in FIG. 2, the cap assembly 600 may include a cap plate 610 for sealing the can 100 and a gasket 620 which insulates between the can 100 and the cap plate 610.

The cap plate 610 may include a disk-shaped flat surface portion 612, an inclined surface 614 connected to the flat surface portion 612, and an extending surface 616 connected to the inclined surface 614. The flat surface portion 612 may be arranged substantially parallel to the second electrode current collecting plate 400. The inclined surface 614 may extend to be inclined downward from an edge of the flat surface portion 612. The extending surface 616 may extend from an edge of the inclined surface 614 and may be parallel to the flat surface portion 612. The extending surface 616 may be located between the beading portion 132 and the crimping portion 134 in a state of being surrounded by the gasket 620. A notch 612a may be formed in the flat surface portion 612. The notch 612a may be broken based on a pressure in the secondary battery 10 being greater than or equal to a pressure (e.g., a set or predetermined pressure). A gas in the secondary battery 10 may be discharged when the notch 612a is broken. That is, the notch 612a serves as a vent.

The gasket 620 is located between a lower portion of the beading portion 132 and the crimping portion 134 and may surround the extending surface 616 of the cap plate 610. The gasket 620 may cover a part or all of the extending surface 616. A side where the gasket 620 and the extending surface 616 are in contact with each other may be defined as the inside, and a side where the gasket 620 is in contact with the beading portion 132 may be defined as the outside. In this case, a portion of the contact portion 420 of the second electrode current collecting plate 400 may be inserted between an outer upper portion of the gasket 620 and the beading portion 132. Accordingly, the contact portion 420 of the second electrode current collecting plate 400 and the extending surface 616 of the cap plate 610 are not in contact with each other due to the gasket 620. That is, the gasket 620 may insulate the cap plate 610 and the can 100 from each other, and may insulate the cap plate 610 and the second electrode current collecting plate 400 from each other.

According to the above-described structure, the rivet terminal 510 has a positive polarity and the can 100 has a negative polarity. Accordingly, it has a structure in which both a positive electrode and a negative electrode are located at the top of the can 100.

Hereinafter, an anti-corrosion material (or layer or means) for preventing or reducing corrosion or rust in areas where corrosion or rust may occur in the above-described example cylindrical secondary battery will be described below in more detail.

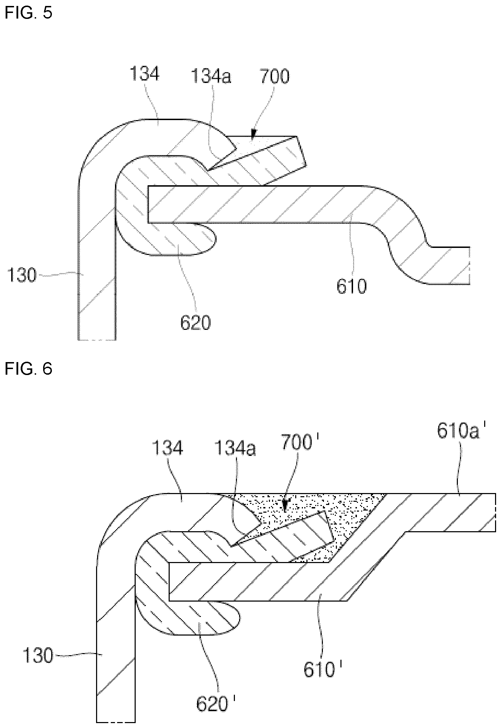

As described above, the cap plate 610 is fixed to the can 100 by the crimping portion 134 through the gasket 620. FIG. 5 is a schematic diagram briefly illustrating an anti-corrosion portion according to some embodiments of the present disclosure. As shown in FIG. 5, an anti-corrosion material 700 may be provided in a region between the end portion of the side portion 130 and an upper surface of the gasket 620. The anti-corrosion material 700 may be an anti-corrosion liquid according to some embodiments.

When the side portion 130 of the can 100 is formed in some manufacturing processes, an end portion of the crimping portion 134, which is an end portion of the side portion 130 (an end portion opposite a bottom portion), has a cut surface 134a formed by cutting a metal plate, which is the material of the can 100. Because the cut surface 134a is a portion exposed to the air, there is a risk of corrosion.

Further, although the gasket 620 is present between the crimping portion 134 and the cap plate 610, corrosion may occur at the end portion of the crimping portion 134 even due to slight leakage of the electrolyte due to repeated use of the secondary battery 10. When corrosion becomes severe, rust may occur and affect the quality of the secondary battery such as a sealing force or the like. A portion vulnerable to corrosion or rust is a cut portion where a raw material is cut, such as the end portion of the crimping portion 134, a welding portion, and a molding portion such as a trimming portion, or the like. Accordingly, in order to prevent or reduce the risk of the corrosion or rust, a structure in which the anti-corrosion material 700 is applied to the above-described portions will be proposed.

As shown in FIG. 5, an example in which the anti-corrosion material 700 is provided is the end portion of the crimping portion 134. According to some embodiments as illustrated in FIG. 5, the cap plate 610 is located closer to the electrode assembly than the end portion of the crimping portion 134. The anti-corrosion material 700 may be provided to sufficiently cover the cut surface 134a of the end portion of the crimping portion 134 so that the cut surface 134a is not exposed to the air. In this case, the anti-corrosion material 700 may be entirely provided in a region (e.g., a set or predetermined region) including the end portion of the crimping portion 134 and the end portion of the gasket 620. The gasket 620 may not protrude beyond the end portion of the crimping portion 134, or may protrude more. When the gasket 620 protrudes more than the crimping portion 134, the anti-corrosion material 700 may entirely fill a region from the end portion of the crimping portion 134 to the end portion of the gasket 620.

The anti-corrosion material 700 may be an anti-corrosion liquid which is one of a normal material such as an ethylene-vinyl acetate copolymer (EVA), a polyethylene (PE) material, a polypropylene (PP) material, or the like and a hot-melt material such as a BU-302 material having heat resistant/flame retardant characteristics or the like, or a combination of two or more. Alternatively, the anti-corrosion material 700 may be an acrylic or olefin adhesive, a potting material (e.g., foamed silicone filled between cells of a battery pack)/UV solution, general oil-based paint, a zinc primer, or the like.

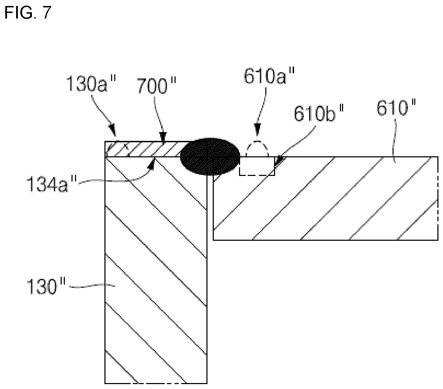

FIGS. 6 and 7 are schematic diagrams briefly illustrating anti-corrosion portions according to some embodiments of the present disclosure.

According to some embodiments as illustrated in FIG. 6, a cap plate 610' may have a curve. In this case, an edge of the cap plate 610' may be located closer to the electrode assembly than the end portion of the crimping portion 134. However, a portion of the cap plate 610' may protrude further outward than the end portion of the crimping portion 134. In this case, the gasket 620 may be located between the end portion of the crimping portion 134 and a maximally protruding surface of the cap plate 610' (hereinafter, a maximally protruding surface 61 0a'). In this case, an anti-corrosion material 700' may entirely fill a region between the end portion of the crimping portion 134 and the maximally protruding surface 610a' of the cap plate 610'. However, this is only an example, and the anti-corrosion material 700' may be provided only up to the end portion of the crimping portion 134 and the end portion of the gasket 620.

Meanwhile, according to some embodiments as illustrated in FIG. 7, a cap plate 610" has a straight plate shape, and an edge of the cap plate 610" may be coupled to a side portion 130" by welding without crimping. In this case, according to some embodiments, a thin insulating film may be provided between the side portion 130" and the cap plate 610" instead of the gasket. In this case, an anti-corrosion material 700" may be provided to sufficiently cover a welding portion and a cut surface 134" of an end portion of the side portion 130". When the anti-corrosion material 700" is an anti-corrosion liquid, a protrusion or rib 130a" or 61 0a" may be provided to prevent the anti-corrosion liquid from flowing to the outside of the side portion 130" or a center of the cap plate 610". The protrusion or rib 130a" or 610a" may be formed on either or both the side portion 130" and the cap plate 610". An example shape of the protrusion or rib 130a" or 610a" is shown in a dotted line in FIG. 7. The protrusion or rib 130a" or 610a" may be provided to be lower than a height of a weld bead formed in the welding portion. Because FIG. 7 is a cross-sectional view, the protrusion or rib 130a" or 610a" is shown as one. However, because the side portion 130" has a cylindrical shape and the cap plate 610" has a circular shape, the protrusion or rib 130a" or 610a"may have a circular ring shape when viewed from above (e.g., in a plan view). Alternatively, a concave groove 610b" may be formed instead of the protrusion or rib 130a" or 610a" on the cap plate 610" to prevent or reduce the anti-corrosion liquid from flowing. For example, the above-described groove may be formed through forging. The groove 610b" may also have a circular ring shape when viewed from above (e.g., in a plan view).

Further, the anti-corrosion material 700 may also be provided in a terminal hole portion in all of the above-described embodiments.

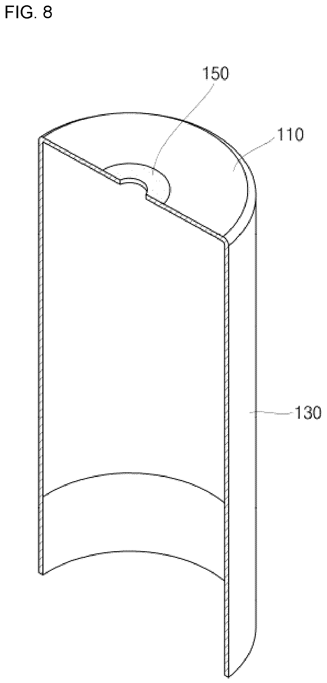

FIG. 8 is a schematic diagram briefly illustrating examples of anti-corrosion portions according to some embodiments of the present disclosure.

As shown in FIG. 8, all of the secondary batteries 10 according to some embodiments as illustrated in FIGS. 5 to 7 may have the same terminal portion structure. The above-described anti-corrosion material may also be provided in the terminal hole to which the above-described rivet terminal 510 is coupled and a peripheral region 150. The terminal hole is a portion where the cut surface is formed by cutting the upper surface portion 110 of the can 100, and thus may also be vulnerable to corrosion. Accordingly, for example, the anti-corrosion liquid may be applied to cover the terminal hole and the peripheral region 150 thereof.

A cylindrical secondary battery according to some embodiments of the present disclosure is corrosion-resistant so that a cut surface or welding surface prone to corrosion or rust is not exposed to air. Accordingly, the occurrence of corrosion or rust on the cut surface or welding surface can be prevented or reduced.

## Claims

1. A cylindrical secondary battery (10) comprising:
an electrode assembly (200);
a can (100) accommodating the electrode assembly (200) therein, and including an upper surface portion (110) in which a terminal hole (110a) is formed at one end, and a cylindrical side portion (130) extending downward from the upper surface portion (110);
a terminal portion (500) coupled to the terminal hole (110a) and electrically connected to the electrode assembly (200);
a cap plate (610, 610') coupled to an end portion of the side portion (130) and
electrically connected to the electrode assembly (200); and
an anti-corrosion material (700, 700') at a coupling portion (528) of the side portion (130) and the cap plate (610, 610').

2. The cylindrical secondary battery (10) of claim 1, wherein:
the side portion (130) includes a beading portion (132) concavely formed on an upper portion of the cap plate (610, 610'), and a crimping portion (134) spaced apart from the beading portion (132) and whose end portion is formed to be bent inward; and
the cap plate (610, 610') is between the beading portion (132) and the crimping portion (134).

3. The cylindrical secondary battery (10) of claim 2, further comprising a gasket (620) inserted between the cap plate (610, 610') and the side portion (130).

4. The cylindrical secondary battery (10) of claim 3, wherein the anti-corrosion material (700, 700') covers the end portion of the crimping portion (134).

5. The cylindrical secondary battery (10) of claim 3, wherein the anti-corrosion material (700, 700') covers the end portion of the crimping portion (134) and an end portion of the gasket (620).

6. The cylindrical secondary battery (10) of claim 3, wherein the anti-corrosion material (700, 700') covers the end portion of the crimping portion (134), an end portion of the gasket (620), and a portion of the cap plate (610, 610').

7. The cylindrical secondary battery (10) of any one of the preceding claims, wherein the cap plate (610, 610') is welded to the side portion (130).

8. The cylindrical secondary battery (10) of claim 7, wherein the anti-corrosion material (700, 700') covers the end portion of the side portion (130).

9. The cylindrical secondary battery (10) of claim 7, wherein the anti-corrosion material (700, 700') covers a welding portion of the end portion of the side portion (130) and the cap plate (610, 610').

10. The cylindrical secondary battery (10) of any one of the preceding claims, wherein the anti-corrosion material (700, 700') is an anti-corrosion liquid.

11. The cylindrical secondary battery (10) of claim 10, further comprising a protrusion or rib (130a) protruding from at least one surface of an outer end portion of the side portion (130) and one side of the cap plate (610, 610') adjacent to the welding portion.

12. The cylindrical secondary battery (10) of claim 11, wherein the protrusion or rib (130a) has a lower height than a weld bead formed in the welding portion of the cap plate (610, 610').

13. The cylindrical secondary battery (10) of claim 12, wherein the protrusion or rib (130a) has a circular ring shape.

14. The cylindrical secondary battery (10) of claim 10, wherein the cap plate (610, 610') further includes a groove (610b) concavely formed from a surface adjacent to the welding portion.
